# EUROPEAN PATENT SPECIFICATION

(11) **EP 1 642 817 B1**
(45) Date of publication and mention of the grant of the patent: **12.01.2011**
(21) Application number: 05255536.4
(22) Date of filing: 09.09.2005
(51) Int. Cl.: B62K 25/28

(54) **Swing arm pivot structure in motorcycles and motortricycles**
Schwingenstruktur in Zwei- und Dreirädern mit Motor
Structure de bras oscillant pour bicycles et tricycles avec moteur

(30) Priority: 30.09.2004 JP 2004287137
(43) Date of publication of application: 05.04.2006
(73) Proprietor: Honda Motor Co., Ltd., Tokyo (JP)
(72) Inventor: Hattori, Katsutaka, c/o Kabushiki Kaisha Honda, Wako-shi Saitama (JP); Manaka, Akio, c/o Kabushiki Kaisha Honda, Wako-shi Saitama (JP); Akieda, Masao, c/o Kabushiki Kaisha Honda, Wako-shi Saitama (JP); Baba, Masayuki, c/o Kabushiki Kaisha Honda, Wako-shi Saitama (JP)
(74) Representative: Stevens, Jason Paul

(56) References cited:
- EP-A- 1 486 411
- DE-B- 1 073 335
- JP-A- 6 087 481
- JP-A- 59 018 080
- US-A- 4 765 431
- US-A- 5 361 864
- US-A- 5 531 289
- US-A- 5 785 141
- US-A1- 2004 130 123
- US-B1- 6 189 638

## Description

The present invention relates to a swing arm pivot structure for use in motorcycles or motortricycles including a swing arm for journaling a wheel, a bearing mounted to a proximal portion of the swing arm, and a pivot shaft mounted to a vehicle body frame and fitted to the bearing.

Known prior art motorcycles and motortricycles use a structure in which a tapered bearing (also referred to as a taper-roller bearing) is mounted to an internal cylinder of a proximal portion of a swing arm, and a pivot shaft is screwed to the vehicle body frame at a position corresponding thereto. An inner end portion of the pivot shaft is inserted into an inner peripheral portion of the tapered bearing from the axially outside, so that the pivot shaft fixed to the vehicle body frame and the swing arm can be relatively rotatable via the bearing is known (for example, see JP-A-59-18080).

In the prior art structure, it is necessary to apply a preload to the tapered bearing in the thrust direction in order to make the tapered bearing operate with precision. However, since the preload may vary as a result of deterioration with age (such as loosening at a screwed portion between the pivot shaft and the vehicle body frame), the screwed portion is bound by a locking agent to lock a mounting position of the pivot shaft to the vehicle body frame. Therefore, it is necessary to use the screw locking agent specifically, and hence there arises a problem such that handling of the screw locking agent and adjustment of the preload are relatively troublesome tasks, which lowers operating efficiency.

An alternative prior art structure is disclosed in US 5785141, on which the preamble of claim 1 is based.

In view of such circumstances, it is an object of at least the preferred embodiments of the present invention to provide a swing arm pivot structure for use in motorcycles or motortricycles which can solve the above-described problem in the related art with a simple structure.

According to a first aspect of the present invention, there is provided a motorcycle or motortricycle with a swing arm pivot structure, comprising a swing arm for journaling a wheel, a bearing mounted to a proximal portion of the swing arm, and a pivot shaft mounted to a vehicle body frame and fitted to the bearing, wherein the pivot shaft is screwed to the vehicle body frame and a nut member which can engage the vehicle body frame so as not to be capable of moving in one axial direction is screwed on the pivot shaft,
**characterized in that** a locking member which can mechanically lock the pivot shaft with respect to the nut member is provided, which locking member can engage the pivot shaft in such a manner that an end portion of the pivot shaft is forcedly deformed and opened in the radial direction and brought into crimp contact with the nut member.

In this aspect, the pivot shaft is fitted to the bearing on the swing arm side to the vehicle body frame to set a preload with respect to the bearing, and then the nut member screwed to the pivot shaft is engaged with the vehicle body frame and tightened strongly so as not to be capable of moving in one axial direction, so that the pivot shaft can be mechanically locked to an adequate mounting position. Therefore, a tightened state of the pivot shaft can hardly be varied even with the swinging motion or the like of the swing arm, the screw locking agent is not necessary and the preload adjusting operation with respect to the bearings is facilitated, simplifying assembly.

Further, as a locking member which can mechanically lock the pivot shaft with respect to the nut member is provided, the pivot shaft can be locked more reliably to the adequate mounting position.

In addition, as the locking member engages the pivot shaft in such a manner that an end portion of the pivot shaft is forcedly deformed and opened in the radial direction and brought into crimp contact with the nut member, the end portion of the pivot shaft can then be integrated with the nut member not only in the axial direction, but also in the radial direction without rattling, whereby swinging support of the swing arm by the pivot shaft can be achieved with precision without rattling.

Preferred embodiments of the present invention will be described in detail by way of example only with reference to the accompanying drawings, in which:
Fig. 1 is a side view of a rear portion of a motorcycle showing a first embodiment of the present invention;
Fig. 2 is an enlarged cross-sectional view taken along a line 2-2 in Fig. 1;
Fig. 3 is an enlarged cross-sectional view taken along a line 3-3 in Fig. 2 (cross-sectional view taken along a line 2-2 in Fig. 3);
Fig. 4 is a cross-sectional view taken along a line 4-4 in Fig. 3;
Fig. 5 is a cross-sectional view corresponding to Fig. 3 showing a variant design which does not form part of the present invention;
Fig. 6 is a cross-sectional view taken along a line 6-6 in Fig. 5;
Fig. 7 is a cross-sectional view corresponding to Fig. 3 (cross-sectional view taken along a line 7-7 in Fig. 8) showing a second embodiment of the present invention;
Fig. 8 is a cross-sectional view taken along a line 8-8 in Fig. 7; and
Fig. 9 is a cross-sectional view taken along a line 9-9 in Fig. 7.

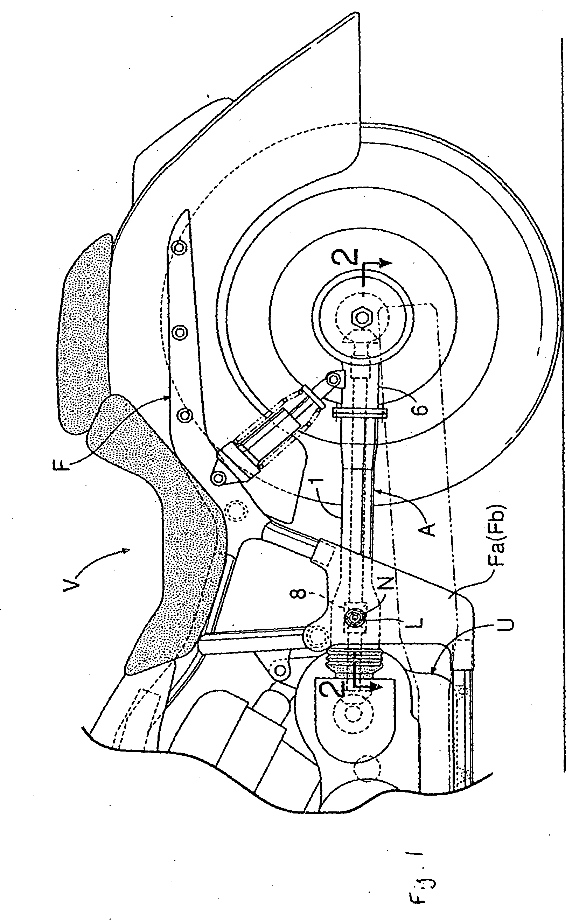

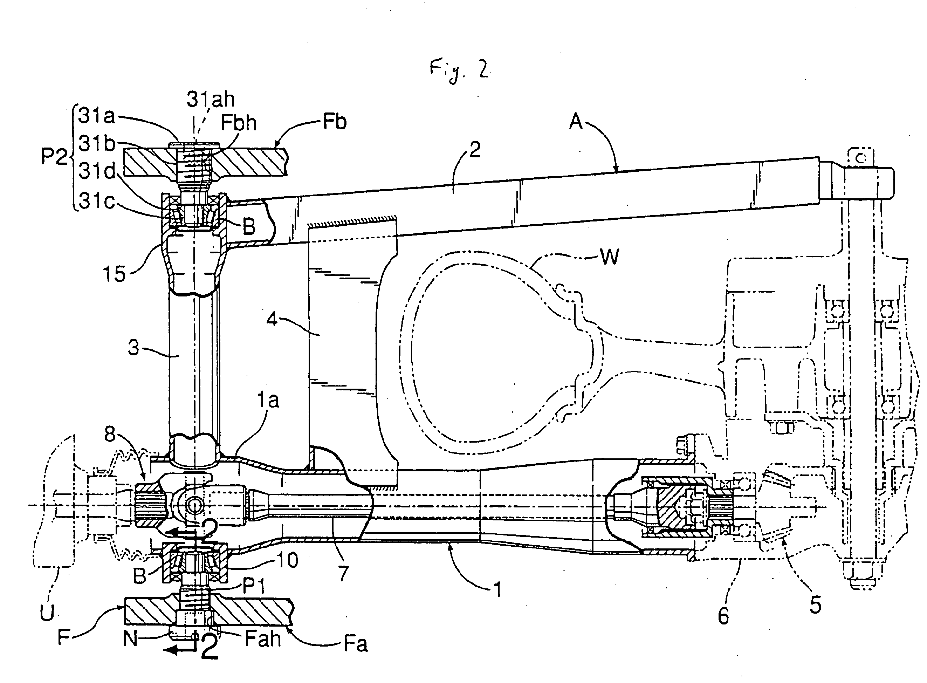

The first embodiment will be described first. In Figs. 1 and 2, a power unit U including an engine and a transmission is mounted at a centre portion of a vehicle body frame F of a motorcycle V, and a proximal portion, that is, a front end portion of a swing arm A is supported so as to be capable of swinging in the vertical direction via a pair of left and right first and second pivot shafts P1, P2 and tapered bearings B, B for receiving the pivot shafts P1, P2 fitted thereto. A rear wheel W is rotatably journaled at a distal portion, that is, at a rear end portion of the swing arm A. The rear wheel W and the power unit U are connected by a shaft-drive type power transmitting mechanism, described later.

In an example illustrated in the drawings, the swing arm A includes a pair of left and right rear fork pipes 1, 2, a front end cross member 3 for integrally joining front end portions of the rear fork pipes 1, 2 to each other, and an intermediate cross member 4 for integrally joining midsections of the rear fork pipes 1, 2 to each other.

Connected at a rear end portion of one of the pair of left and right rear fork pipes 1 is a gear case 6 including a bevel gear mechanism 5 connected with the rear wheel W integrated therein, and accommodated in the rear fork pipe 1 is a propeller shaft 7 for causing rotation between an output shaft of the power unit U and an input shaft of the bevel gear mechanism 5, extending longitudinally in the pipe 1.

The front end portion of the propeller shaft 7 and the output shaft of the power unit U are interlocked and connected by a universal joint 8, and the universal joint 8 is accommodated in a joint case 1a formed by causing the front end portion of the one of the rear fork pipes 1 to protrude in the radial direction. Between a front element of the universal joint 8 and the output shaft of the power unit U, or between the rear element of the universal joint 8 and the front end portion of the propeller shaft 7, is a disconnectable spline-fitted structure, allowing the two to be connected to each other so as not to be capable of relative rotation via the spline-fitted portion. Therefore, when assembling the swing arm A having the propeller shaft 7 integrated therein to the vehicle body frame F, the shaft 7 and the output shaft side of the power unit U are connected via the spline-fitted portion.

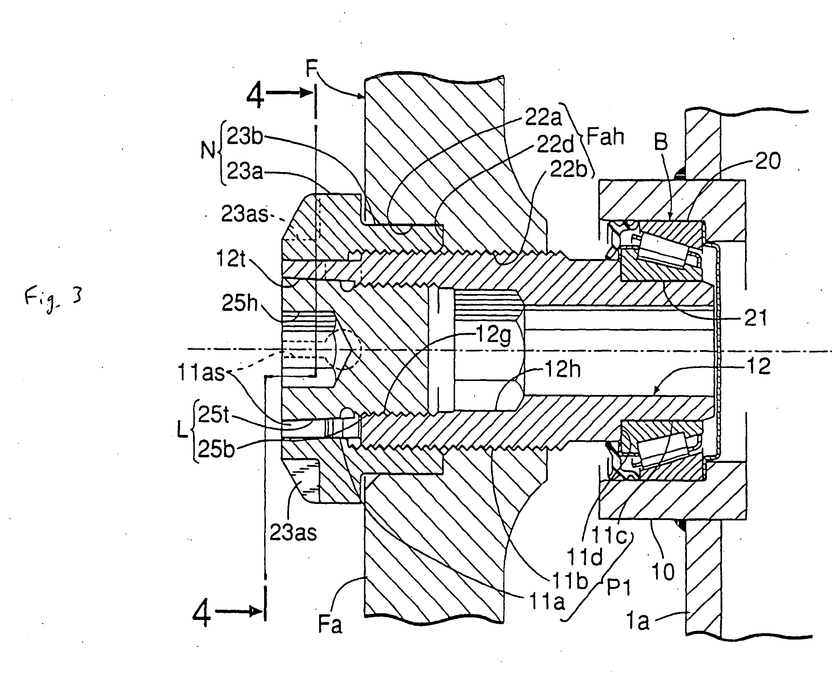

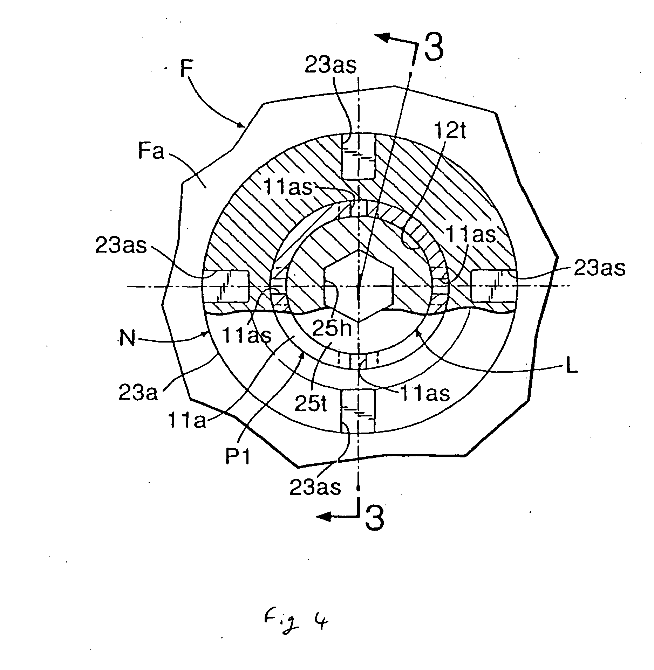

Disposed between both left and right side portions of the proximal portion, that is, a front end portion of the swing arm A, and both left and right side portions Fa, Fb of the vehicle body frame F, which are adjacent thereto on the outsides thereof, are a pair of left and right pivot mechanisms for swingably supporting the swing arm A, respectively, and a structure of these pivot mechanisms will be described in detail referring also to Fig. 3 and Fig. 4.

Secured to an outer wall of the front end portion (that is, the joint case 1a) of one of the left and right rear fork pipes 1 on the opposite side from the front end cross member 3 is a first supporting cylinder 10 protruding from an outer surface thereof to an extension of the cross member 3. An external cylinder 20 of the tapered bearing B is integrally fitted to an inner peripheral surface of the first supporting cylinder 10 by fitting means such as press-fitting, and one of the left and right first pivot shafts P1 is fitted to an internal cylinder 21 of the tapered bearing B as described later.

A first supporting hole Fah is formed on one of the left and right side portions Fa of the vehicle body frame F corresponding to the tapered bearing B, and the first supporting hole Fah includes a smaller-diameter hole portion 22b on the side of the tapered bearing B and a larger-diameter hole portion 22a adjacent thereto via an annular shoulder portion 22d, and the smaller-diameter hole portion 22b is formed with a female thread.

The first pivot shaft P1 is integrally and coaxially formed with an intermediate shaft portion 11b being relatively large in diameter, which passes through the first supporting hole Fah and is formed with a male thread on an outer periphery thereof, an outer shaft portion 11a being relatively small in diameter, which extends continuously from the outer end side of the intermediate shaft portion 11b so as to protrude toward the outside of the vehicle body frame F, and an inner shaft portion 11c being relatively small in diameter, which extends continuously from the inner end side of the same intermediate shaft portion 11b via an annular shoulder portion 11d, so that a shouldered cylindrical shape is formed.

A centre hole 12 of the first pivot shaft P1 is opened at least at an outer end side (the opposite side from the bearing B), and is formed with an engagement hole portion 12h with which a tool (not shown) for tightening the pivot shaft P1 from the outer side of the vehicle body frame F can engage so as not to be capable of relative rotation at a midsection of the centre hole 12. The portion of the centre hole 12 on the outside with respect to the engagement hole portion 12h is formed with a screw hole portion 12g in an area of the centre shaft portion 11b and a tapered hole portion 12t which gradually increases in diameter toward the outside in an area of the outer shaft portion 11a.

The internal cylinder 21 of the tapered bearing B is detachably fitted to the outer periphery of the inner shaft portion 11c, and the outer end of the internal cylinder 21 is engaged with the annular step portion 11d. Part of the intermediate shaft portion 11b (a half on the bearing side in the drawing) is screwed onto the smaller-diameter hole portion 22b of the first supporting hole Fah, and a nut member N is screwed on the outer periphery of an extended end extending outward (that is, within the larger-diameter hole portion 22a) from the smaller-diameter hole portion 22b.

The nut member N is coaxially and integrally formed with a smaller-diameter cylindrical portion 23b, the outer periphery of which is fitted into the larger-diameter hole portion 22a so as to be capable of relative rotation and the inner periphery of which is screwed on the intermediate shaft portion 11b, and a larger-diameter cylindrical portion 23a protruding outwardly on the side portion Fa of the vehicle body frame, so that a shouldered cylindrical shape is formed. Formed on the outer end surface of the larger-diameter cylindrical portion 23a is an engagement hole 23as with which a tool (not shown) for tightening the nut member N can engage, and the inner peripheral surface of the larger-diameter cylindrical portion 23a is fitted on the outer peripheral surface of the outer shaft portion 11a of the first pivot shaft P1.

In the present embodiment, a locking member L, which can mechanically lock, that is, integrally restrain, the first pivot shaft P1 with respect to the nut member N is provided. The locking member L includes a collet member which can engage the pivot shaft P1 in such a manner that the outer end portion of the first pivot shaft P1 is forcedly deformed and opened in the radial direction and bought into crimp contact with the nut member N in the illustrated example.

The locking member L includes a screw shaft portion 25b to be screwed into the inner peripheral surface (that is, the screw hole portion 12g) of the intermediate shaft portion 11b of the first pivot shaft P1, and a tapered shaft portion 25t extended coaxially and integrally from the screw shaft portion 25b. The outer peripheral surface of the tapered shaft portion 25t is formed into a tapered surface which is expanded toward the distal side, which can taper-fit to the inner peripheral surface (that is, the tapered hole portion 12t) of the outer shaft portion 11a of the first pivot shaft P1. The outer end surface of the tapered shaft portion 25t is formed with an engagement hole 25h with which a tool (not shown) for rotating the same from the outer side of the vehicle body frame F can be engaged.

The outer shaft portion 11a of the first pivot shaft P1 has screw slotting, that is, a plurality of slits 11as opening at the outer end and extending in the axial direction are formed at the outer shaft portion 11a, and hence the outer shaft portion 11a can be deformed resiliently in a greater or less degree in the radial direction owing to the formation of the slits 11as. Therefore, when the screw shaft portion 25b of the locking member L is firmly screwed into the intermediate shaft portion 11b (that is, the screw hole portion 12g) of the first pivot shaft P1, the outer shaft portion 11a of the pivot shaft P1 is forcedly deformed and opened in the radial direction by the tapered outer peripheral surface of the tapered shaft portion 25t, thereby being brought into crimp contact with the nut member N (that is, the inner peripheral surface of the larger-diameter cylindrical portion 23a), whereby the outer end portion of the pivot shaft P1 can be integrated with the nut member N not only in the axial direction, but also in the radial direction without rattling.

A second supporting cylinder 15 opened outward is integrally formed at the other end portion of the front end cross member 3, and the external cylinder 20 of the tapered bearing B is integrally fitted to the inner peripheral surface of the second supporting cylinder 15 by fixing means such as press-fitting. As described later, the other one of the left and right second pivot shafts P2 is fitted in the internal cylinder 21 of the tapered bearing B. Then, a second supporting hole Fbh is formed on the other one of the left and right side portions Fb of the vehicle body frame F corresponding to the tapered bearing B. Being different from the first supporting hole Fah, the second supporting hole Fbh is formed into a screw hole having a uniform inner diameter along the entire axial length thereof.

The second pivot shaft P2 is integrally and coaxially formed with an intermediate shaft portion 31b being relatively large in diameter, which passes through the first supporting hole Fah and is formed with a male thread on the outer periphery thereof, a flange-shaped enlarged head portion 31a formed on the outer end side of the intermediate shaft portion 31b so as to extend continuously therefrom and engaged with the outer side portion Fb of the vehicle body frame F, and an inner shaft portion 31c being relatively small in diameter, which extends continuously from the inner end side of the same intermediate shaft portion 31b via an annular shouldered portion 31d, so that a shouldered shaft is formed. Then, the internal cylinder 21 of the tapered bearing B is fitted and retained on the inner shaft portion 31c of the second pivot shaft P2 in a state in which an end thereof is engaged with the annular shouldered portion 31d.

An engagement hole 31ah with which a tool (not shown) for rotating the same can engage is formed on the outer end surface of the aforementioned enlarged head portion 31a. Therefore, when the second pivot shaft P2 is tightened firmly in the first supporting hole Fah with the tool in a state in which the side portion Fb of the vehicle body frame and the enlarged head portion 31a are engaged, the pivot shaft P2 is firmly secured in the first supporting hole Fah by its tightening torque, and is substantially integrated without using screw locking agent or the like.

Subsequently, the operation of the aforementioned first embodiment will be described.

When mounting the swing arm A to the vehicle body frame F, the left and right tapered bearings B, B are mounted in the first and second supporting cylinders 10, 15 both on the left and right sides of the swing arm A in advance in such a manner that the respective external cylinders 20 thereof are fixed by fixing means such as press-fitting.

Then, the front end portion of the swing arm A is moved into a predetermined mounting position between the left and right side portions Fa, Fb of the vehicle body frame F (that is, the position where the first and second supporting cylinders 10, 15 and the supporting holes Fah, Fbh of the left and right side portions Fa, Fb are coaxially aligned), and then the intermediate shaft portion 31b of the second pivot shaft P2 is screwed into the second supporting hole Fbh from the outside of the one side portion Fb of the vehicle body frame F. Then, the inner shaft portion 31c thereof is fitted into the internal cylinder 21 of the corresponding tapered bearing B, and the outer end of the internal cylinder 21 is engaged with the annular shouldered portion 31d. In this state, the second pivot shaft P2 is firmly tightened to integrally fasten to the corresponding side portion Fb of the vehicle body frame F.

Subsequently, the intermediate shaft portion 11b of the first pivot shaft P1 is screwed into the first supporting hole Fah from the outer side of the other side portion Fa of the vehicle body frame F. Then, the inner shaft portion 11c thereof is fitted into the internal cylinder 21 of the corresponding tapered bearing B, and the outer end of the internal cylinder 21 is engaged with the annular shouldered portion 11d. Then, by gradually tightening the pivot shaft P1 toward the bearing so as to fine-adjust the engaged position of the first pivot shaft P1 with respect to the first supporting hole Fah, a preload which is to be applied by the first and second pivot shafts P1, P2 to the left and right tapered bearings B is set to an adequate value.

Subsequently, the nut member N is screwed onto the first pivot shaft P1 (in the illustrated example, the portion of the intermediate shaft portion 11b extending outward from the screw hole portion 22b) in a state in which the engaged position of the first pivot shaft P1 with respect to the first supporting hole Fah is retained with the tool or the like. Then, the nut member N is tightened further firmly after engagement of the inner end thereof with the intermediate shouldered portion 22d of the first supporting hole Fah, so that the engaged position can be locked with its tightening torque.

In this manner, since the first pivot shaft P1 can be mechanically locked to an adequate mounting position (that is, a mounting position at which the preload is set to the adequate value) with respect to the side portion Fa of the vehicle body frame, the tightened state of the first pivot shaft P can hardly be varied even with the swinging motion or the like of the swing arm A. In addition, the screw locking agent is not necessary and the preload adjusting operation with respect to the bearings B is facilitated, whereby improved ease of assembly is achieved.

Also, in this embodiment, the outer shaft portion 11a of the first pivot shaft P1 is forcedly deformed and opened in the radial direction by the tapered outer peripheral surface of the tapered shaft portion 25t and brought into crimp contact with the nut member N (that is, the inner peripheral surface of the aforementioned large-diameter cylindrical portion 23a) by firmly screwing the screw shaft portion 25b of the locking member L into the intermediate shaft portion 11b (that is, the screw hole portion 12g) of the first pivot shaft P1. Therefore, the outer end portion of the pivot shaft P1 can be integrated with the nut member N not only in the axial direction, but also in the radial direction without rattling, and hence locking of the pivot shaft P1 at the aforementioned adequate mounting position is ensured further reliably and, in addition, the swinging support of the swing arm A by the pivot shaft P1 is achieved adequately without rattling.

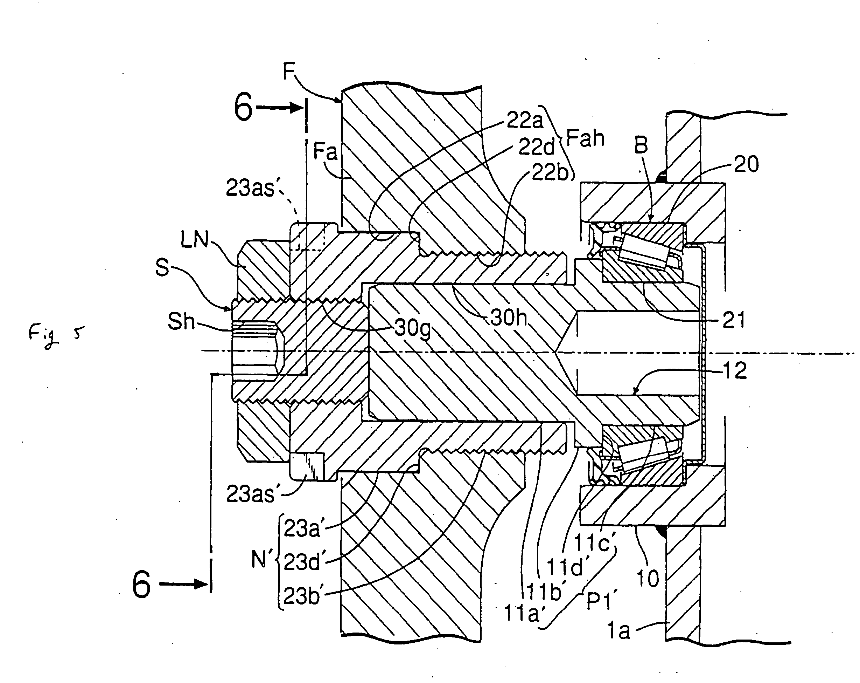

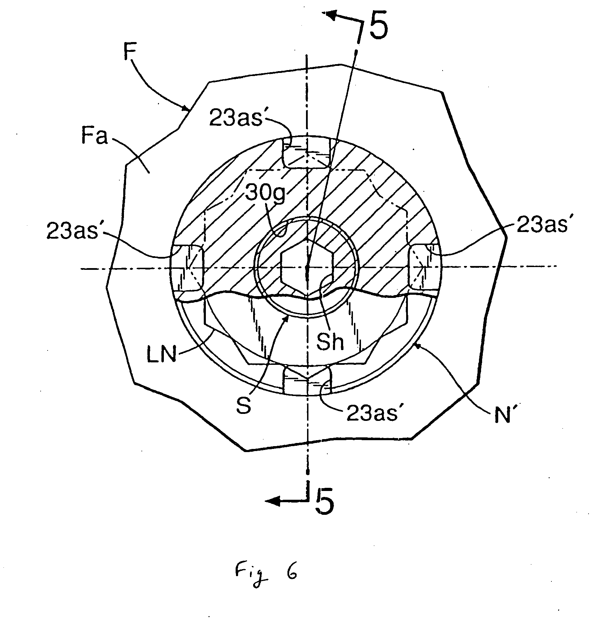

Referring now to Fig. 5 and Fig. 6, a variant design which does not form part of the present invention will be described. This variant is described herein to aid understanding of the second embodiment.

In the variant, since the mounting structure of the second pivot shaft P2 to the vehicle body frame F is the same as that in the first embodiment, and only the mounting structure of a first pivot shaft P1' to the vehicle body frame F is different from the first embodiment, description will be made only on the different points in detail below.

A cylindrical nut member N' is tightened into the first supporting hole Fah of the vehicle body frame F, and the inner periphery of the nut member N' is adjacently formed with an inner side (bearing side) supporting hole portion 30h for fitting to and supporting the first pivot shaft P1' and an outer screw hole portion 30g with which an adjusting member S being engageable with the pivot shaft P1' so as to press the first pivot shaft P1' toward the tapered bearing B is secured.

The nut member N' is coaxially and integrally formed with a smaller-diameter cylindrical portion 23b' on the inner side (bearing side), the outer periphery of which is screwed into the smaller-diameter hole portion 22b of the first supporting hole Fah, and a larger-diameter cylindrical portion 23a' formed adjacently to the smaller-diameter cylindrical portion 23b' with the intermediary of an intermediate shouldered portion 23d', fitted to the outer larger-diameter portion 22a of the first supporting hole Fah so as to be capable of relative rotation, and protruded outwardly of the side portion Fa of the vehicle body frame, so that a shouldered cylindrical shape is formed. Formed on the outer end surface of the larger-diameter cylindrical portion 23a' is an engagement hole 23as' with which a tool (not shown) for tightening the nut member N' can engage, and the inner peripheral surface of the larger-diameter cylindrical portion 23a' is formed with a female screw with which the adjusting member S is screwed.

In this manner, since the nut member N' is screwed into the first supporting hole Fah of the side portion Fa of the vehicle body frame, and is engaged with the vehicle body frame F so as not to be capable of moving in one axial direction (toward the bearing), by tightening the nut member N' also further firmly after engagement between the intermediate shouldered portion 23d' and the intermediate shouldered portion 22d of the first supporting hole Fah, the engaged position can be locked by its tightening torque, and hence the nut member N' is tightened, that is, firmly integrated with, the vehicle body frame F.

An outer shaft portion 11a' of the first pivot shaft P1' is slidably fitted to the part of the inner peripheral surface of the nut member N' on the inner side (bearing side) with respect to the female thread, that is, the supporting hole portion 30h. The first pivot shaft P1' integrally formed with the outer shaft portion 11a', an inner shaft portion 11c' formed to have the same diameter as the outer shaft portion 11a' on which the internal cylinder 21 of the tapered bearing B is fitted, and an intermediate shaft portion 11b' of a short shaft shape (flange shape) which connects the inner and outer shaft portions 11c', 11a', and the outer end of the internal cylinder 21 of the tapered bearing B is engaged with a shouldered portion 11d' between the intermediate shaft portion 11b' and the inner shaft portion 11c'.

The outer end surface of the adjusting member S is formed with an engagement hole Sh with which a tool (not shown) for tightening the adjusting member S can be engaged, and the outer peripheral surface of the adjusting member S is formed with a male thread over the entire area in the axial direction. Then, a lock nut LN which is located on the outer side of the nut member N' and is capable of being engaged with the nut member N' so as not to be capable of moving in one axial direction (toward the bearing B) is screwed on the outer peripheral surface of the adjusting member S.

Subsequently, the operation of the variant will be described.

The working process until the second pivot shaft P2 is integrally tightened to one of the side portions Fb of the vehicle body frame F when mounting the swing arm A to the vehicle body frame F is the same as in the first embodiment. Therefore, description only on a mounting procedure of the first pivot shaft P1' will be given below.

In this manner, after having completed assembly of the second pivot shaft P2, the nut member N' in which the outer shaft portion 11a' of the first pivot shaft P1' is fitted to the supporting hole portion 30h, and the adjusting member S is not mounted, or screwed into the screw hole portion 30g to a small extent is prepared, and the smaller-diameter cylinder portion 23b' thereof is screwed into the first supporting hole Fah (smaller-diameter hole portion 22b) of the other side portion Fa of the vehicle body frame F, and together with it, the inner shaft portion 11c of the first pivot shaft P1' is fitted into the internal cylinder 21 of the tapered bearing B. In this case, dimensions of the respective parts are set so that the intermediate shouldered potion 23d' of the nut member N' engages the intermediate shouldered portion 22d of the first supporting hole Fah before the annular shouldered portion 11d' of the first pivot shaft P1' abuts against the outer end of the internal cylinder 21 of the tapered bearing B. Therefore, by tightening the same further firmly after engagement, the nut member N' can firstly be tightened firmly to the vehicle body frame F.

After having tightened the nut member N', the adjusting member S is sufficiently screwed into the screw hole portion 30g thereof and the first pivot shaft P1' engaged with the front end thereof is pressed toward the tapered bearing B. When the annular shouldered portion 11d' of the first pivot shaft P1' is engaged with the outer end of the internal cylinder 21 of the tapered bearing B by this pressing operation, the adjusting member S is further rotated to perform fine adjustment of the engaged position with respect to the nut member N', whereby the preload to be applied by the first and second pivot shafts P1, P2 to the left and right tapered bearings B is set to an adequate value.

Subsequently, the lock nut LN is screwed on the outer periphery of the adjusting member S in a state in which the engaged position of the adjusting member S with respect to the nut member N' is retained by the tool or the like, and the lock nut LN is tightened further firmly after engagement between the inner end thereof and the nut member N', whereby the engaged position of the adjusting member S with respect to the nut member N' can be locked with the tightening torque.

In this manner, since the first pivot shaft P1' can be mechanically locked at an adequate mounting position (that is, the position at which the preload is set to the adequate value) with respect to the side portion Fa of the vehicle body frame, the tightened state of the first pivot shaft P1' can hardly be varied even with the swinging motion or the like of the swing arm A. In addition, the screw locking agent is not necessary and the preload adjusting operation with respect to the bearings B is facilitated, whereby improved ease of assembly is achieved.

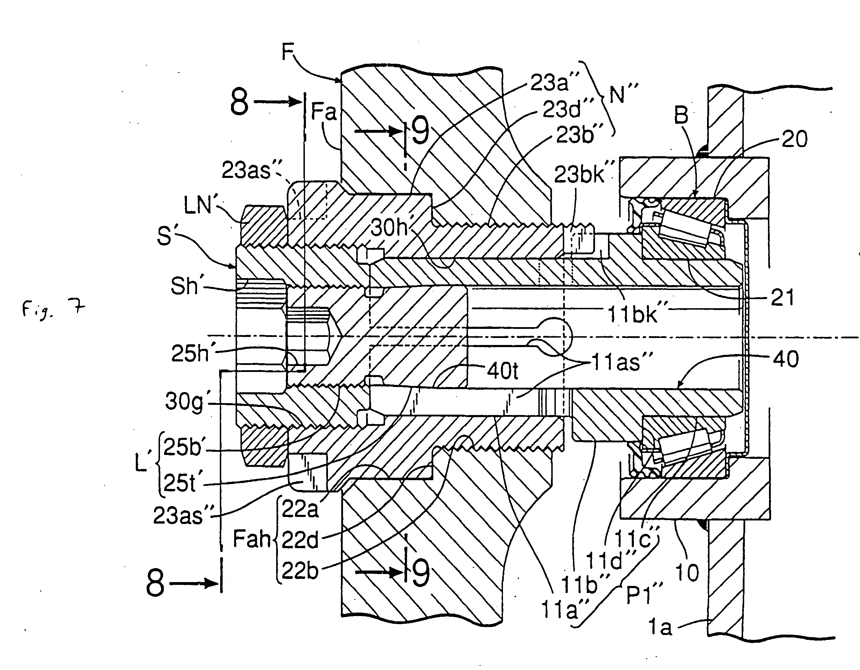

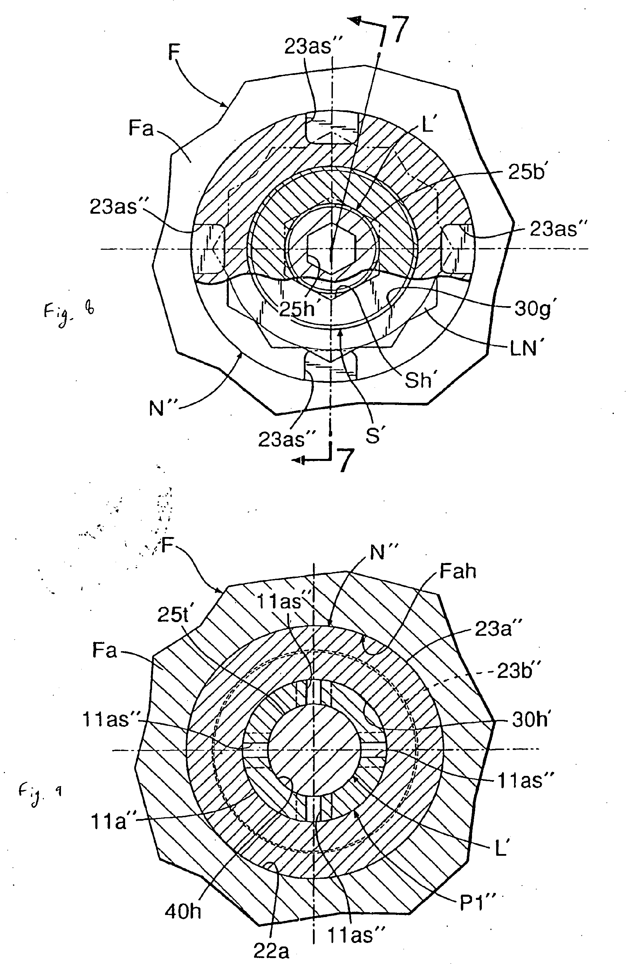

Referring now to Fig. 7 to Fig. 9, a structure of a second embodiment of the present invention will be described.

In the second embodiment, since the mounting structure of the second pivot shaft P2 to the vehicle body frame F is the same as that in the first embodiment, and only the mounting structure of a first pivot shaft P1" to the vehicle body frame F is different from the first embodiment, description will be made only on the different points in detail below.

In the second embodiment, a cylindrical nut member N" is tightened into the first supporting hole Fah of the vehicle body frame F, and the inner periphery of the nut member N" is adjacently formed with an inner side (bearing side) supporting hole portion 30h' for fitting to and supporting the first pivot shaft P1", and an outer screw hole portion 30g' with which an adjusting member S' being engageable with the pivot shaft P1" so as to press the first pivot shaft P1" toward the tapered bearing B is secured.

The nut member N" is coaxially and integrally formed with a smaller-diameter cylindrical portion 23b" on the inner side (bearing side), the outer periphery of which is screwed into the smaller-diameter hole portion 22b of the first supporting hole Fah, and a larger-diameter cylindrical portion 23a" formed adjacently to the smaller-diameter cylindrical portion 23b" with the intermediary of an intermediate shouldered portion 23d", fitted to the outer larger-diameter portion 22a of the first supporting hole Fah so as to be capable of relative rotation, and protruded outwardly of the side portion Fa of the vehicle body frame, so that a shouldered cylindrical shape is formed. Formed on the outer end surface of the larger-diameter cylindrical portion 23a" is an engagement hole 23as" with which a tool (not shown) for tightening the nut member N" can engage, and the inner peripheral surface of the larger-diameter cylindrical portion 23a" is formed with a female screw with which the adjusting member S' is screwed.

In this manner, since the nut member N" is screwed into the first supporting hole Fah of the side portion Fa of the vehicle body frame, and is engaged with the vehicle body frame F so as not to be capable of moving in one axial direction (toward the bearing), by tightening the nut member N" also further firmly after engagement between the intermediate shouldered portion 23d" and the intermediate shouldered portion 22d of the first supporting hole Fah, the engaged position can be locked by its tightening torque, and hence the nut member N" is tightened, that is, firmly integrated with, the vehicle body frame F.

An outer shaft portion 11a" of the first pivot shaft P1' is slidably fitted to the part of the inner peripheral surface of the nut member N" inside (bearing side) than the female thread. The first pivot shaft P1" is a hollow cylinder being integrally formed with the outer shaft portion 11a", an inner shaft portion 11c" formed to have the same diameter as the outer shaft portion 11a" for allowing the tapered bearing B to be fitted on the outer periphery thereof, and an intermediate shaft portion 11b" of a short shaft shape (flange shape) which connects the inner and outer shaft portions 11c" and 11a", and the outer end of the internal cylinder 21 of the tapered bearing B is engaged with a shouldered portion 11d" between the intermediate shaft portion 11b" and the inner shaft portion 11c". A centre hole 40 of the first pivot shaft P1" is opened at least the outer end side (the opposite side from the bearing) thereof, and a tapered surface 40t narrowing toward the distal end is formed in the centre hole 40 of the outer shaft portion 11a" at a portion close to the outer end.

The outer end surface of the adjusting member S' is formed with an engagement hole Sh' with which a tool (not shown) for tightening the adjusting member S' can be engaged, and the outer peripheral surface of the adjusting member S' is formed with a male thread. Then, the lock nut LN which is located on the outer side of the nut member N" and is capable of being engaged with the nut member N" so as not to be capable of moving in one axial direction (toward the bearing B) is screwed on the outer peripheral surface of the adjusting member S'.

The structures described thus far are basically the same as the variant. However, the second embodiment is further provided with a locking member L' which can mechanically lock, that is, can integrally restrain the first pivot shaft P1 with respect to the nut member N. The locking member L' includes a collet member which can engage the pivot shaft P1" in such a manner that the outer end portion of the first pivot shaft P1" is forcedly deformed and opened in the radial direction and brought into crimp contact with the nut member N" in the illustrated example.

In other words, the locking member L' includes a screw shaft portion 25b' to be screwed into the inner peripheral surface of the adjusting member S', and a tapered shaft portion 25t' extended coaxially and integrally from the screw shaft portion 25b'. The outer peripheral surface of the tapered shaft portion 25t' is formed into a tapered surface which is expanded toward the distal side, which can taper-fit to the inner peripheral surface (the tapered hole portion 40t) of the outer shaft portion 11a" of the first pivot shaft P1. The outer end surface of the screw shaft portion 25b' is formed with an engagement hole 25h' with which a tool (not shown) for rotating the same from the outer side of the vehicle body frame F can be engaged.

The outer shaft portion 11a" of the first pivot shaft P1" has screw slotting, that is, a plurality of slits 11as" opening at the outer end and extending in the axial direction are formed on the outer shaft portion 11a', and hence the outer shaft portion 11a" can be deformed resiliently in a greater or less degree in the radial direction owing to the formation of the slits 11as". Therefore, when the screw shaft portion 25b' thereof is screwed with the adjusting member S' and rotated strongly so as to pull out the locking member L' outwardly (on the opposite side from the bearing), the outer shaft portion 11a" of the pivot shaft P1" is forcedly deformed and opened in the radial direction by the tapered outer peripheral surface of the tapered shaft portion 25t', thereby being brought into crimp contact with the nut member N", whereby the outer end portion of the pivot shaft P1" can be integrated with the nut member N" not only in the axial direction, but also in the radial direction without rattling.

Detent means for preventing the locking member L' from rotating the first pivot shaft P1" in association with the rotating operation described above is provided between the nut member N" and the pivot shaft P1". The detent means includes an engaging projection 23bk" provided on one of the nut member N" and the pivot shaft P1" in the illustrated example and an engaging recess 11bk" provided on the other one of those to be engaged with the engaging projection 23bk" between the recess and the projection.

The operation of the second embodiment will be described below.

The working process until the second pivot shaft P2 is integrally tightened to one of the side portions Fb of the vehicle body frame F when mounting the swing arm A to the vehicle body frame F is the same as in the first embodiment. Therefore, description only of a mounting procedure of the first pivot shaft P1" will be given below.

A subassembly, which is assembled in advance by screwing the adjusting member S' into the inner periphery of the nut member N", fitting the outer shaft portion 11a" of the first pivot shaft P1" thereto, then fitting the tapered shaft portion 25t' of the locking member L' to the outer shaft portion 11a" (tapered hole portion 40t) of the pivot shaft P1 loosely, that is, with a play in the axial direction, and screwing the shaft portion 25b' into the inner periphery of the adjusting member S, is prepared.

Then, after having completed assembly of the second pivot shaft P2, the smaller-diameter cylindrical portion 23b" of the nut member N" in the subassembly is screwed into the first supporting hole Fah (smaller-diameter hole portion 22b) of the other side portion Fa of the vehicle body frame F, and together with it, the inner shaft portion 11c of the first pivot shaft P1" is fitted into the internal cylinder 21 of the tapered bearing B. In this case, dimensions of the respective parts are set so that the intermediate shouldered potion 23d" of the nut member N" engages the intermediate shouldered portion 22d of the first supporting hole Fah before an annular shouldered portion 11d" of the first pivot shaft P1" abuts against the outer end of the internal cylinder 21 of the tapered bearing B. Therefore, by tightening the same further firmly after engagement, the nut member N", that is, the aforementioned subassembly can be tightened firmly to the vehicle body frame F.

After having tightened the nut member N", the adjusting member S' is sufficiently screwed into the screw hole portion 30g' thereof and the first pivot shaft P1" engaged with the front end thereof is pressed toward the tapered bearing B. When the annular shouldered portion 11d" of the first pivot shaft P1" is engaged with the outer end of the internal cylinder 21 of the tapered shaft bearing B by this pressing operation, the adjusting member S is further rotated to perform fine adjustment of the engaged position with respect to the nut member N", whereby the preload to be applied by the first and second pivot shafts P1, P2 to the left and right tapered bearings B is set to an adequate value.

Subsequently, the lock nut LN' is screwed on the outer periphery of the adjusting member S' in a state in which the engaged position of the adjusting member S' with respect to the nut member N" is retained by the tool or the like, and the lock nut LN' is tightened further firmly after engagement between the inner end thereof and the nut member N", whereby the engaged position of the adjusting member S' with respect to the nut member N" is locked with the tightening torque.

In this manner, since the first pivot shaft P1" can be mechanically locked at an adequate mounting position (that is, the position at which the preload is set to the adequate value) with respect to the side portion Fa of the vehicle body frame, the tightened state of the first pivot shaft P1" can hardly be varied even with the swinging motion or the like of the swing arm A. In addition, the screw locking agent is not necessary and the preload adjusting operation with respect to the bearings B is facilitated, whereby improved ease of assembly is achieved. Furthermore, since the nut member N", the adjusting member S', the first pivot shaft P1", and the locking member L' can be sub-assembled in advance before assembling to the vehicle body frame F, handling of these members is easy, and hence ease of assembly is further improved.

In addition, according to the present embodiment, by screwing the screw shaft portion 25b' of the lock member L' on the outer periphery of the adjusting member S' and rotating the same strongly to pull out outwardly (in the opposite side from the bearing), the outer shaft portion 11a" of the pivot shaft P1" is forcedly deformed and opened in the radial direction by the tapered outer surface of the tapered shaft portion 25t', thereby being brought into crimp contact with the nut member N". Accordingly, since the outer end portion of the pivot shaft P1" can be integrated with the nut member N" not only in the axial direction, but also in the radial direction without rattling, the pivot shaft P1" can be locked further reliably at the aforementioned adequate mounting position, and the swinging support of the swing arm A by the pivot shaft P1" is achieved adequately without rattling.

In the above-described respective embodiments, the first pivot shafts P1, P1', P1" constitutes the pivot shaft of the present invention.

Although the embodiments of the present invention have been described thus far, the present invention is not limited thereto, and various modifications in design may be made.

For example, although the example in which the present invention is applied to the swing arm pivot structure for motorcycles has been illustrated in the above-described respective embodiments, the present invention can be applied to the swing arm pivot structure for motortricycles.

Although the example in which the present invention is implemented in the swing arm pivot structure including the shaft-drive type power transmission mechanism integrated therein has been illustrated in the above-described respective embodiments, the present invention may be implemented in a vehicle in which a power transmission mechanism other than the shaft-drive type power transmission mechanism (for example, a chain-drive type power transmission mechanism).

Although the example in which the tapered bearing (taper-roller bearing) as a bearing is used has been illustrated in the above-described embodiments, various bearings, which require the setting operation of the preload in the thrust direction for assembly may be used. For example, an angular roll bearing may be used instead of the tapered bearing in the present invention.

Although the example in which the first pivot shaft P1, P1', P1" is disposed on the left side, that is, on the side of the propeller shaft, and the second pivot shaft P2 is disposed on the opposite side thereof has been illustrated in the above-describe respective embodiments, the left and right positions of the first and second pivot shafts may be changed, or, alternatively, the second pivot shaft P2 is eliminated and both of the pivot shafts on the left and right are formed to have the same structure as the first pivot shaft P1, P1', P1" in the present invention.

Although the example in which the nut member N', N" is tightened to the frame F as a separate member from the vehicle body frame F has been illustrated in the second embodiment, the portion corresponds to the nut member N', N" may be formed integrally with the vehicle body without any partition, and in this case, the supporting hole portion 30h, 30h' or the screw hole portion 30g, 30g', which are formed on the nut member N', N" in the second embodiments are formed directly on the vehicle body frame F in the present invention.

## Claims

1. A motorcycle or motortricycle with a swing arm pivot structure, comprising a swing arm (A) for journaling a wheel (W), a bearing (B) mounted to a proximal portion of the swing arm (A), and a pivot shaft (P1) mounted to a vehicle body frame (F) and fitted to the bearing (B), wherein the pivot shaft (P1) is screwed to the vehicle body frame (F) and a nut member (N) which can engage the vehicle body frame (F) so as not to be capable of moving in one axial direction is screwed on the pivot shaft (P1),
**characterized in that** a locking member (L, L') which can mechanically lock the pivot shaft (P1, P1") with respect to the nut member (N, N") is provided, which locking member (L, L') can engage the pivot shaft (P1, P1") in such a manner that an end portion of the pivot shaft (P1, P1") is forcedly deformed and opened in the radial direction and brought into crimp contact with the nut member (N, N").

## Patentansprüche

1. Motorrad oder Motordreirad mit einer Schwinghebel-Gelenkstruktur, umfassend einen Schwinghebel (A) zum drehbaren Lagern eines Rades (W), ein Lager (B), das an einem Proximalabschnitt des Schwinghebels (A) angebracht ist, und eine Schwenkachse (P1), die an einem Fahrzeugkörperrahmen (F) angebracht und in das Lager (B) eingepasst ist, wobei die Schwenkachse (P1) an den Fahrzeugkörperrahmen (F) geschraubt ist und ein Mutterelement (N), das mit dem Fahrzeugkörperrahmen (F) derart in Eingriff sein kann, dass es nicht in der Lage ist, sich in eine axiale Richtung zu bewegen, an die Schwenkachse (P1) geschraubt ist,
**dadurch gekennzeichnet, dass** ein Sperrelement (L, L') bereitgestellt ist, welches die Schwenkachse (P1, P1") hinsichtlich dem Mutterelement (N, N") mechanisch sperren kann, wobei das Sperrelement (L, L') mit der Schwenkachse (P1, P1") derart in Eingriff sein kann, dass ein Endabschnitt der Schwenkachse (P1, P1") zwangsweise deformiert und in die radiale Richtung geöffnet ist und in Klemmverbindungskontakt mit dem Mutterelement (N, N") gebracht ist.

## Revendications

1. Motocycle ou tricycle motorisé avec une structure de pivotement de bras oscillant, comprenant un bras oscillant (A) pour faire tourner une roue (W), un palier (B) monté sur une partie proximale du bras oscillant (A), et un axe de pivot (P1) monté sur un cadre de carrosserie de véhicule (F) et installé sur le palier (B), dans lequel l'axe de pivot (P1) est vissé sur le cadre de carrosserie de véhicule (F) et un élément écrou (N) qui peut entrer en prise avec le cadre de carrosserie de véhicule (F) afin de ne pas être capable de se déplacer dans une direction axiale est vissé sur l'axe de pivot (P1),
**caractérisé en ce qu'**un élément de verrouillage (L, L') qui peut verrouiller mécaniquement l'axe de pivot (P1, P1") par rapport à l'élément écrou (N, N") est prévu, lequel élément de verrouillage (L, L') peut entrer en prise avec l'axe de pivot (P1, P1") de manière telle qu'une partie, d'extrémité de l'axe de pivot (P1, P1") est déformée et ouverte de force dans la direction radiale et mise en contact à sertissage avec l'élément écrou (N, N").
